Europäisches Patentamt

European Patent Office

Office européen des brevets

(19)

(11) Publication number:

**0 114 455**

**A1**

(12) **EUROPEAN PATENT APPLICATION**

(21) Application number: **83303835.9**

(22) Date of filing: **01.07.83**

(51) Int. Cl.³: **F 16 L 33/26**
**F 16 L 33/24**

(30) Priority: **19.01.83 GB 8301469**

(43) Date of publication of application:
**01.08.84 Bulletin 84/31**

(84) Designated Contracting States:
**AT BE CH DE FR GB IT LI LU NL SE**

(71) Applicant: **ICORE INTERNATIONAL LIMITED**
**Leigh Road**
**Slough SL1 4BB(GB)**

(72) Inventor: **Parkin, Alan**
**Gorselands Briff Lane**
**Upper Bucklesbury Reading Berkshire(GB)**

(72) Inventor: **Kirby, Roy John**
**13 Abbey Road**
**Chertsey Surrey(GB)**

(74) Representative: **Johnson, Terence Leslie et al,**
**Edward Evans & Co. Chancery House 53-64 Chancery**
**Lane**
**London WC2A 1SD(GB)**

(54) **A coupling for a conduit.**

(57) The invention relates to a coupling (1) for a conduit of the kind having an internal surface with convolutions extending axially of the conduit, comprising a first part (2) with external surface convolutions (3) complementary to those of a conduit to which the coupling (1) is to be connected and a second part (4) defining with the first part (2) a tapered gap (7) whereby when the coupling and conduit (1) are connected together by relative rotation, the respective complementary convolutions engage and draw the coupling and conduit together so that a seal is formed between the end of the conduit and the first and second parts (2), (3) of the coupling.

FIG 1

EP 0 114 455 A1

A coupling for a conduit

TECHNICAL FIELD OF INVENTION

The invention relates to a coupling for a conduit, and to a conduit with a coupling mounted thereon.

BACKGROUND ART

Couplings for conduits, whether of rigid or flexible material, are often heavy and/or cumbersome and usually require the use of a sealing ring of some kind whereby to provide a fluid-tight seal between the coupling and the conduit. Such seals are often easily dislodged or become damaged or deformed. In either case, the union between the coupling and conduit is damaged, and fluid leakage can occur.

DISCLOSURE OF INVENTION

It is an object of the invention to seek to mitigate these disadvantages of the prior art.

According to one aspect of the invention there is provided a coupling for a conduit of the kind having an internal surface with convolutions extending axially of the conduit, comprising a first part with external surface convolutions complementary to those of a conduit to which the coupling is to be connected, and a second part defining with the first part a gap which has an open end and a closed end which is narrower than the open end whereby when an end of the conduit is inserted in the open end of the gap and the coupling and conduit are relatively rotated, the respective convolutions engage and draw the coupling and conduit together so that a seal is formed between the end of the conduit and the first and second parts of the coupling.

Using the invention it is possible to provide a simple yet firm, fluid, particularly a liquid-tight, for example, water-tight, union between a coupling and a conduit without the use of separate seals such as O-rings or annular flanges.

The first and second parts may diverge in an axial direction away from the closed end so that the gap tapers to the junction between the first and second parts. This connection provides a firm sealing action.

The external surface convolutions may be in the form of a helix. This provides for a simple rotational connection with, say, a wire helix of a conduit such as an electrically shielded conduit.

There may be mutually complementary securing means between the first and second parts which may comprise respective screw threads of the first and second parts. This provides for relatively simple construction of the coupling.

The coupling may be of metal, whereby to provide an electrical connection with an electrical shield of an electrically shielded conduit.

A coupling embodying the invention is hereinafter described, by way of example, with reference to the accompanying drawings.

BRIEF DESCRIPTION OF DRAWINGS

Fig. 1 is an axial sectional view of a coupling according to the invention;

Fig. 2 is an enlarged scrap detail of part of the coupling of Fig.1;

Fig. 3 is an enlarged sectional view of an assembled coupling of Figs. 1 and 2 and a conduit.

and Figs. 4 - 6 show respectively different kinds of conduit which can be assembled with the coupling of Figs. 1 and 2.

Referring to the drawings, there is shown a coupling 1 for a conduit comprising a first metal part 2 which has external surface convolutions in the form of a helix 3 and a second metal part 4 secured to the first part 3 by mutually complementary securing means in the form of screw threads 5 and 6. The second part 4 defines with the first part a gap 7 which has an open end and which tapers towards a closed end adjacent the union between the two parts at the screw threads 5 and 6.

The first and second parts 2 and 4 are both tubular, the second part 4 forming a sleeve or shroud for the first part 2 and butting against a shoulder 8 of the first part when the two parts are secured together by the screw threads.

The first part 2 also has a cylindrical threaded connector 9 which is an integral part of the first part and is situated axially of the coupling on the side of the shoulder 8 remote from the convolutions 3.

In order to provide the tapering gap, the external surface 10 of the first part beyond the start of the helical convolutions is stepped and converges towards second part 4, at successive angles of 30° and 10° to the horizontal on the embodiment shown, though any suitable angles could be used. The internal surface 11 (as viewed) of the second part 4 is inclined downwardly towards the first part 2.

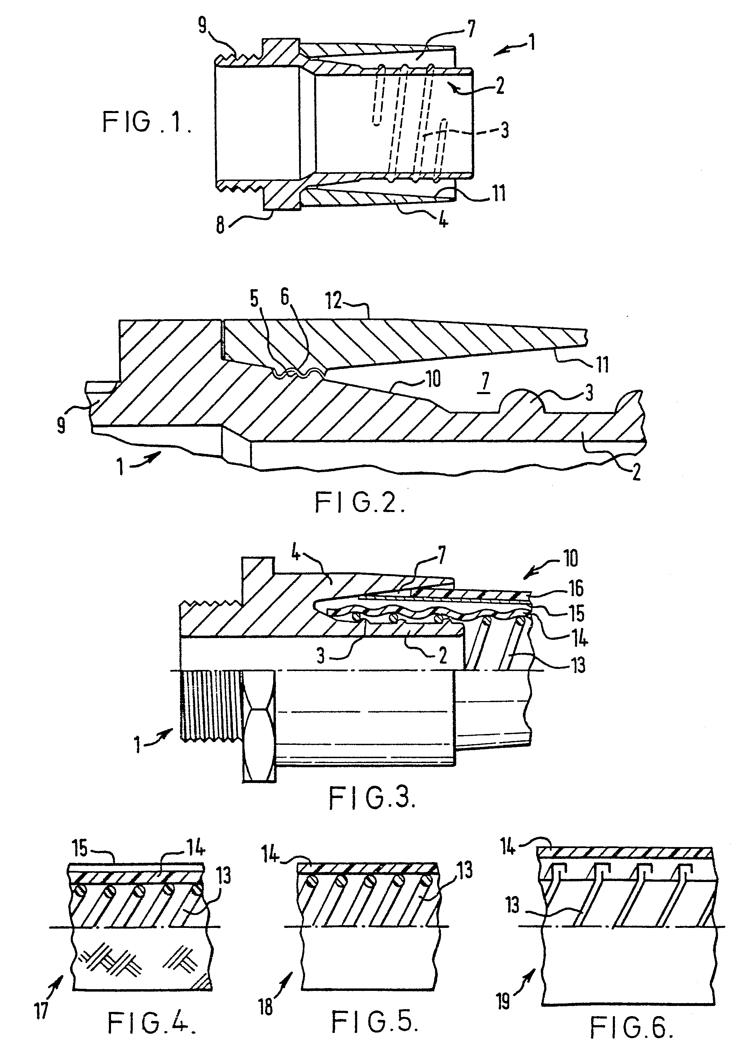

In use to mount the coupling 1 on a conduit 12 (Fig. 3) such as an electrically shielded conduit having internal surface convolutions in the form of a helix 13, a flexible plastics liner 14, metallic braid 15 and flexible plastics sheath 16, the complete coupling 1 is offered up to the end of the conduit 12 and the free end of the first part 2 is inserted in the conduit and the coupling is rotated so that the external surface convolutions 3 pick up and ride along the internal convolutions 13 of the conduit and the first part 2 is drawn axially into the conduit as shown, the conduit itself being forced into the tapered gap 7 between the first and second parts 2 and 4, the second part 4 lying externally of the outer surface of the conduit. This rotation thus draws the coupling and conduit together, the end of the conduit 12 being firmly clamped between them in a water-tight permanent seal at the closed end of the gap 7. The sheath 16 makes a firm, water-tight or environmental seal against the inclined surface 11 of the second part and the metallic braid or shield 15 is clamped with a firm metal to metal contact with the surface 11, the liner 14 making a firm water-tight or environmental seal on inclined surface 10.

The conduit can then be connected with other apparatus via the threaded connector 9.

Figs. 4 to 6 show other forms of conduit which can be coupled with the coupling 1 other than the kind of conduit 12 shown in Fig 3. As the conduits are similar, like reference numerals are used to identify the different parts.

In Fig. 4, the conduit 17 has a rigid inner (as viewed) plastic or metallic helix or coil 13, a flexible plastics liner 14 and external (as viewed) metallic braid 15.

Fig 5. shows a conduit 18 which has an inner (as viewed) rigid plastic helix or coil 13 and an outer (as viewed) flexible plastics liner 14.

Fig. 6 shows a conduit 19 in which the inner (as viewed) coil 13 comprises an interlocked strip, preferably of metal, rather than comprising a regularly shaped coil as in Figs. 3 to 5, the interlocked metal strip being inside an outer flexible plastics liner 14.

It will be understood that in every embodiment, firm environmental seals are formed between the coupling 1 and the conduit 17, 18 or 19 and that the conduits 17, 18 or 19 are assembled with the coupling 1 in the same way as described with respect to the conduit 12 of Fig. 3.

It will also be understood that the coupling 1 may be formed in one piece, rather than in two pieces requiring connection at threads 5 and 6.

It will be understood that the coupling 1 above described and shown in the drawings may be modified. Thus it may be of 'T'-shape or 'L'-shape rather than "in-line" as shown. Also, if a non-electrical conduit is to be mounted thereon it may be made of material which is non-conducting.  Also, the outer surface 11 of the second part
4 is itself tapered towards the surface 11 in a direction away from
the threads 5 and 6 in the embodiment shown, but this feature may
be omitted.

CLAIMS

1. A coupling for a conduit of the kind having internal surface convolutions extending axially of the conduit, characterised by first part (2) with external surface convolutions (3) complementary to those (13) of a conduit to which the coupling (1) is to be connected, and by a second part (4) defining with the first part (2) a gap (7) which has an open end and a closed end which is narrower than the open end so that when an end of the conduit is inserted in the open end of the gap and the coupling (1) and conduit are relatively rotated, the respective convulutions (3), (13) engage and draw the coupling and conduit together.

2. A coupling according to Claim 1, characterised in that the first and second parts (2) and (4) diverging in an axial direction away from the closed end and in that the gap (7) tapers to the junction between the first and second parts (2) and (4).

3. A coupling according to claim 1 or claim 2, characterised in that the external surface convolutions (3) are in the form of a helix.

4. A coupling according to Claim 3, characterised in that each convolution is hemispherical in transverse cross-section.

5. A coupling according to any preceding claim, characterised by mutually complementary securing means (5), (6) between the first and second parts (2), (4).

6. A conduit, characterised by having mounted on an end thereof a coupling (1) according to any preceding claim.

7.	A conduit according to claim 6, characterised in that there is an electrical shield (15) in electrical contact with the coupling (1).

8.	A conduit according to claim 6, characterised by convolutions (13) of the conduit (19) comprising an interlocked strip of metal sections.

0114455

1/1

FIG.1.

FIG.2.

FIG.3.

FIG.4.        FIG.5.        FIG.6.

0114455

# EUROPEAN SEARCH REPORT

Application number

## DOCUMENTS CONSIDERED TO BE RELEVANT

EP 83303835.9

| Category | Citation of document with indication, where appropriate, of relevant passages | Relevant to claim | CLASSIFICATION OF THE APPLICATION (Int. Cl. ³) |
|---|---|---|---|
| X | GB - A - 2 080 465 (HARVEY HUBBELL INC.)<br>* Totality * | 1,2,3, 4,6,7, 8 | F 16 L 33/26<br>F 16 L 33/24 |
| | -- | | |
| X | US - A - 4 288 110 (GRENELL)<br>* Totality * | 1,2,3, 5,6,7 | |
| | -- | | |
| X | US - A - 3 840 256 (COX JR.)<br>* Totality * | 1,2,3, 6,8 | |
| | -- | | |
| A | DE - A1 - 2 332 846 (VORWERK & CO ELEKTRO WERKE KG)<br>* Totality * | 1,3,6 | |
| | ---- | | |

TECHNICAL FIELDS
SEARCHED (Int. Cl. ³)

F 16 L 15/00
F 16 L 33/00
F 16 L 37/00

The present search report has been drawn up for all claims

| Place of search | Date of completion of the search | Examiner |
|---|---|---|
| VIENNA | 02-03-1984 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document